## Europäisches Patentamt

## European Patent Office

## Office européen des brevets

(11) Veröffentlichungsnummer: **0 204 306**
**B1**

(12) **EUROPÄISCHE PATENTSCHRIFT**

(45) Veröffentlichungstag der Patentschrift: **17.10.90**

(51) Int. Cl.⁵: **B 32 B 27/04**

(21) Anmeldenummer: **86107499.5**

(22) Anmeldetag: **03.06.86**

(54) **Wasserbeständiger Verbundkunststoff.**

(30) Priorität: **07.06.85 DE 3520345**

(43) Veröffentlichungstag der Anmeldung:
**10.12.86 Patentblatt 86/50**

(45) Bekanntmachung des Hinweises auf die
Patenterteilung:
**17.10.90 Patentblatt 90/42**

(84) Benannte Vertragsstaaten:
**AT BE CH FR GB IT LI NL SE**

(56) Entgegenhaltungen:
**DE-A-2 364 901**
**DE-A-3 342 386**
**US-A-4 315 964**

(73) Patentinhaber: **Knappe, Holger**
**Ringstrasse**
**D-2061 Grabau (DE)**

(72) Erfinder: **Knappe, Holger**
**Ringstrasse**
**D-2061 Grabau (DE)**

(74) Vertreter: **Siewers, Gescha, Dr.**
**Rechtsanwälte Dr. Harmsen, Dr. Utescher Dipl.-**
**Chem. Harmsen, Bartholatus Dr. Schaeffer, Dr.**
**Fricke, Wolter Patentanwalt Dr. Siewers**
**Adenauerallee 28**
**D-2000 Hamburg 1 (DE)**

**Beschreibung** .

Die Erfindung betrifft Verbundkunstoffe, insbesondere für die Verwendung als Speicher für Wässer oder überweigend wässrige Lösungen.

Unter Verbundwerkstoffen werden Werkstoffe zusammengefaßt, die sich aus verschiedenen Stoffgruppen wie Metallen, Kunststoffen, Gläsern oder keramischen Materialien zusammensetzen und somit Werkstoffeigenschaften aufweisen, die von einer einzelnen Stoffgruppe nicht realisiert werden können. Zu den wichtigsten Verbundwerkstoffen zählen die Faserverbundwerkstoffe, bei denen die hohe Festigkeit bestimmter Materialien in Form von Fäden oder extrem dünnen Einkristallnadeln ausgenutzt wird, um dadurch einen Basiswerkstoff fester und steifer und machen, das heißt also die Festigkeit und den Elastizitätsmodul zur erhöhen. Der Basiswerkstoff übernimmt dabei die Aufgabe, die Fasern räumlich zu fixieren, sie vor Korrosion zu schützen und schließlich auch die Krafteinleitung auf die Fasern zu optimieren. Zu den bekanntesten Faserverbundwerkstoffen zählen glas- und kohlefaserverstärkte Kunststoffe, wie sie beispielsweise zur Herstellung von Haushaltsgegegenständen, Silos oder im Fahrezeugbau bereits seit langem Anwendung finden. Auch Verbundwerkstoffe aus zwei oder mehreren verschiedenen Kunstoffen, jeweils entweder modifiziert oder nicht, sind bereits bekannt und werden als sogenannte Sandwich-Werkstoffe zusammengefaßt; auch in diesen Fällen versucht man, durch die Kombination verschiedener Kunststoffe eine Reihe von wünschenswerten Eigenschaften zu optimieren. Sandwich-Kunstoffe können im Spritzguß hergestellt werden, wobei das Quellen der Massen bei Einströmen in die Form ausgenutzt wird; die an den Formwandungen haftende un erstarrende Haut der Randmasse wird mit andersartiger Kernmasse aufgefüllt. Auch Strangpressen ist möglich, denn bei der Sandwich-Koextrusion wird mit getrennten Masseströmen für Haut und Kern gearbeitet, die in der Düse zusammengeführt werden. Warmformungsverfahren zur Herstellung von Sandwich-Strukturen sind ebenfalls gebräuchlich und werden insbesondere für thermoplastische Kunststoffe eingesetzt. Verkleben oder Verschweißen sind als Herstellungsverfahren ebenfalls möglich und werden teilweise auch durchgeführt.

Verbundstoffe haben sich auf vielen Gebieten als Ersatz für die bisher üblichen Wirkstoffe eingeführt, aber es gibt immer noch Anwendungsbereiche, in denen diese Produkte bisher nicht eingesetzt werden konnten, weil entweder ihre mechanischen Eigenschaften oder andere Besonderheiten die Verwendung anstelle von Metall- oder Glaswerkstoffen nicht möglich machten. Zu diesen Einsatzbereichen zählt beispeilsweise die Herstellung von Wasserspeichern, insbesondere der sogenannten Thermen, die bis heute überwiegend aus emaillierten Stahl bestehen. Emaillierte Stahlspeicher sind aber ausgesprochen korrosionsanfällig, da sich Haarrisse in der Emailleschicht kaum vermeiden lassen und die Geräte regelmäßig bei Temperaturen um etwa 60° darüber betrieben werden und nicht nur der Laie, sonderen auch der Fachmann häufig verblüfft ist über die korrosiven Eingenschaften von Brauch- und Trinkwasser bei derartig erhöhten Temperaturen. Erfahrungsgemäß halten derartige Wasserspeicher nur für eine kurze Betriebszeit von ungefähr 2 Jahren und müssen dann wegen Korrosionsschäden ersetzt werden. Es sind bereits zahlreiche Überlegungen angestellt worden, solche Wasserspeicher aus Kunststoffen anstelle von Metall herzustellen, wobei sich allerdings eine Reihe von Problemen ergeben haben. Wasserspeicher müssen in der Regel ein beträchtliches Volumen bis einige 100 Liter umfassen und daher werden wegen der mechanischen Eigenschaften der Kunstoffe Wandungsdicken notwendig, die zu sehr großen raumfüllenden Geräten führen, die zudem in der Herstellung aufwendig und daher im Vergleich zu den konventionellen Speichern kaum oder überhaupt nicht konkurrenzfähig sind. Als besonderer Nachteil hat sich aber erwiesen, daß bei der Verwendung herkömmlicher Kunststoffe zwar die Lebensdauer gegenüber Metallgeräten etwas verlängert werden kann, andererseits aber. keine tatsächlich verlängerte Lebensdauer in de Größenordnung von etwa 10 Jahren erzeilbar ist, weil das im Behälter enthaltene Wasser bei erhöhter Temperatur auch zu Veränderungen bei den Kunstoffen führt. Kunststoffe mit Ester- oder Amidbindungen unterliegen bereits nach verhältnismäßig kurzer Zeit einer gewissen Hydrolyse, so daß von der Innenseited des Behälters her aufgrund der chemischen Veränderungen die mechanische Stabilität des gesamten Speichers über kurz oder lang sehr verschlechtert wird und eine tatsächlich wesentlich verlängerte Lebensdauer des Gerätes nicht gegeben ist. Bei Verwendung von glasfaserverstärkten Kunststoffen ist es sogar schon vorgekommen, daß nach einiger Zeit durch die chemische Änderung an der Innenseite des Speichers Glasfasern freigesetzt wurden, was eine Gefährdung bei Verwendung als Brauch- und Trinkwasser bedeutet. Aus der DE—OS 33 42 386 sind bereits Verbundkunstoffe aus einer Kombination von glasfaserverstärken ungesättigten Polyesterharzen und styrolmodifizierten Polyphenylenoxid und deren Verwendung zur Herstellung von Speichern für Wasser und im wesentlichen wässrige Lösungen bekannt. Bei diesen Speichern besteht der sogenannte Liner, also die Innenschicht, aus modifizierten PPO, während der Mantel, der zur Verbesserung der mechanischen Stabilität dient, aus faser-, insbesondere glasfaserverstärkten ungesättigten Polyestern aufgebaut ist. Der Glasfaseranteil im Polyesterharz liegt bei etwa 25—30% in Form von üblichen kurzgeschnittenen Fasern. Die Herstellung der Behälter erfolgt nach an sich bekannten Verfahren, beispielsweise im Spritzguß, durch Warmverformung, insbesondere Tiefziehen oder durch Injektionsverfahren.

Die aus diesen Verbundkunstoffen hergestell-

ten Trink- oder Brauchwasserspeicher weisen gegenüber den bisher üblichen Metallthermen eine wesentlich verlängerte Lebensdauer, auf die der gewünschten 10-Jahresgrenze bereits nahekommt. Es hat sich allerdings herausgestellt, daß wenn derartige Wasserspeicher als Druckspeicher mit Betriebsüberdrucken von etwa 10 bar oder darüber betrieben werden, bei den den äußeren Mantel bildenden Teil des Verbundkunststoffes aus ungesättigten faserverstärkten Polyesterharzen eine zu starke Dehnung dieses Teils des Verbundkunststoffes auftreten kann. Durch diese zu starke Dehnung kann eine Lockerung des PPO-Antieles des Verbundkunststoffes eintreten und dies führt dann zu einer Beschädigung des Liners.

Diese Schwiergkeiten lassen sich vermeiden, wenn das faserverstärkte ungesättigte Polyesterharz einen hohen Faseranteil von mindestens 60%, z.B. etwa 60—80%, in Form von fast 100% längsgelegten Gelege und damit Biegefestigkeiten z.B. im Bereich von 800—1000 N/mm$^2$ und Zugfestigkeiten im Bereich von etwa 700—900 N/mm$^2$ aufweist.

Die beanspruchten Verbundkunstoffe bestehen aus Polyesterharzen und modifizierten Polyphenylenoxid. Ungesättige Polyexterharze, meist als UP abgekürzt, sind bekannte Duroplaste die durch Veresterung von Dialkoholen, vorwiegend Ethylenglycol bis Butylenglycol mit Fumarsäure oder Maleinsäureanhydrid und teilweise gesättigten Disäuren wie Phthalsäure, Isophthalsäure oder Het-Säure oder Adipinsäure hergestellt werden. Teilweise wird auch noch Diallylphthalat einkondensiert und die Polyester mit Styrol vermischt. Die exotherme Vernetzungspolymerisation zwischen den Polyesterketten wird im allgemeinen durch Peroxidhärter oder Bestrahlung initiiert.

Ungesättigte Polyesterharze werden zu einem großen Teil im Bauwesen als Zusatz zu Beton oder Klebemörteln, in der Elekrotechnik als Gießharze und für Formteile verwendet, im letzteren Falle meist als faserverstärkte Kunststoffe. Hierfür werden Glasfasern eingesetzt, deren Anteil in der Mischung zwischen etwa 10—80%, je nach Anwendungszweck, betragen kann. Ungesättigte Polyesterharze sind im Handel als sogenannte Prämixe erhältlich, denen vor der Verarbeitung nur noch der Härter zugesetzt werden muß. Je nach Zusammensetzung der Polyestermischung und dem Anteil an Faserverstärkung können Biegefestigkeit und Zugfestigkeit in weiten Bereichen eingestellt werden.

Polyphenylenoxid ist ein Thermoplast, abgekürzt PPO, der durch Polykondensationen von disubstituierten Phenolen mit relativ kleinen Seitengruppen hergestellt wird. Der sich dabei bildende Polyether weist eine hohe Steifigkeit und hohe Formbeständigkeit in der Wärme auf und verfügt außerdem nur über ein geringes Wasseraufnahmevermögen. Heute werden vorzugsweise nicht Polyphenyloxid, sondern mit Styrol modifiziertes Polyphenylenoxid eingesetzt, da bei dem Homokondensat bei höheren Temperaturen ein oxidativer Abbau feststellbar ist. Das modifizierte PPO weist hingegen eine höhere Wärmebeständigkeit und auch eine höhere Oxidationsbeständigkeit bei sonst im wesentlichen unveränderten mechanischen Eigenschaften auf. Modifiziertes PPO wird zu einer Reihe von Formteilen wie beispielsweise Zubehör zu Rundfunk- und Fernsehgeräten, Schaltergehäusen, Armaturen, Schloßteilen usw. verarbeitet. Modifiziertes PPO gilt als gesundheitlich unbedenklich und ist von der FDA zugelassen.

Selbstverständlich können die erfindungsgemäßen Verbundkunststoffe nicht nur als Wasserspeicher für Brauch- oder Trinkwasser zum Einsatz kommen, sondern auch auf allen anderen Gebieten, in denen Wasser oder überwiegend wässrige Lösungen bei erhöhten Temperaturen gespeichert werden müssen, wie beispielsweise in Industrieanlagen oder Gewerbebetrieben.

Beispiel

Ein Prämix aus UP mit einem Glasfaseranteil von 60% in Form von fast 100% längsgelegtem Gelege wird nach Zusatz eines Fotohärters im Negativverfahren in an sich bekannter Weise zu Speicherhalbschalen tiefgezogen. Nach dem Lichtaushärten und Abtrennen der Ränder dienen die Behälterhalbschalen bei der weiteren Bearbeitung selbst als Form. Die Halbschalen werden an der Flanschöffnung und ggf. an anderen vorgesehen Öffnungen mit einem Haftvermittler versehen, dann wird in die Form eine Halbschale aus modifizierten PPO eingezogen. Die Wandstärke dieser zweiten Halbschale kann in weiten Bereichen variiert werden.

Als modifiziertes PPO wird vorzugsweise ein solches mit einer Wasseraufnahmefähigkeit von höchstens 0,08% im allgemeinen aber unter 0,07% eingesetzt. Die Behälterhälften werden nach Anbringung der Öffnungen, Flansche und Anschlüsse in üblicher Weise, z.B. durch Ultraschallschweißen, Verkleben oder Schrauben zusammengefügt. Das Fassungsvermögen dieses Brauchwasserbehälters beträgt etwa 80 Liter.

Die Überprüfung des so hergestellten Behälters hinsichtlich des Dehnverhaltens bei Innendruck ergab nach den Vorschriften des technischen Überwachungsvereins Bayern eine maximale Dehnung im Behälterumfangsrichtung von etwa 4,45‰, in Längsrichtung des Behälters eine solche von etwa 0,25‰. Bei einem üblichen Betriebsdruck von etwa 10 bar errechnet sich somit eine theoretische Sicherheit von $S = 5$—6.

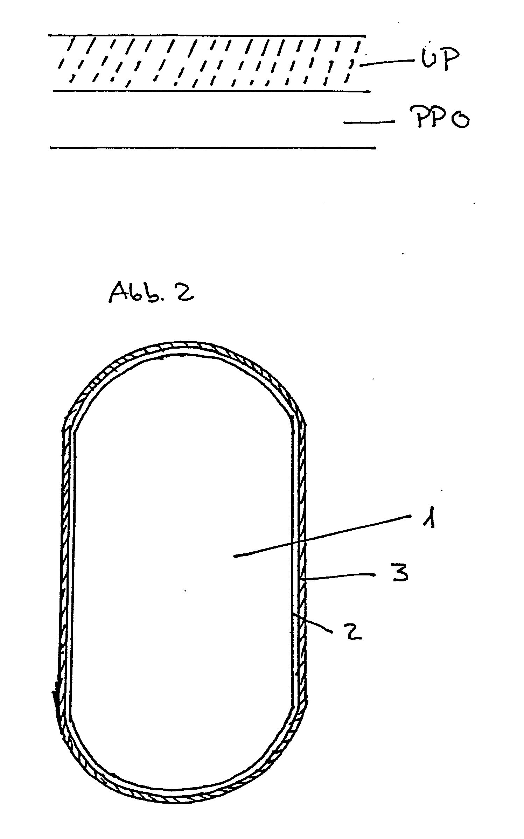

Die weitere Erläuterung erfolgt anhand der beigefügten Abbildungen, wobei Abb. 1 einen Querschnitt durch den erfindungsgemäßen Verbundkunststoff und Abb. 2 einen Querschnitt durch einen Speicher darstellt.

Abb. 1 zeigt einen Querschnitt durch den Verbundkunststoff, wobei sich die eine Schicht aus modifiziertem PPO und die andere Schicht aus glasfaserverstärktem UP zusammensetzt.

Abb. 2 zeigt in Querschnitt mit stark vergrößert gezeichneten Wandungen einen Speicher 1, bei dem die Wandungen innensettig aus modifiziertem PPO und außenseitig aus glasfaserverstärktem Polyesterharz gebildet sind.

## Patentansprüche

1. Verbundkunststoff, bestehend aus einer Kombination aus faserverstärkten ungesättigten Polyesterharzen und styrolmodifizierten Polyphenylenoxid, gekennzeichnet durch einen Faseranteil von mindestens 60% in Form von fast 100% längsgelegtem Gelege.

2. Verbundkunststoff nach Anspruch 1, gekennzeichnet durch Zug- und Biegefestigkeitswerte des ungesättigten Polyesters im Bereich von 700—900 N/mm² bzw. 800—1000 N/mm² und des modifizierten Phenylenoxids von etwa 40—60 N/mm² bzw. 85—105 N/mm².

3. Verbundkunststoff nach Anspruch 1 oder 2, dadurch gekennzeichnet, daß er im Tiefziehverfahren oder im Wickelverfahren hergestellt wird, wobei das Polyphenylenoxid als Liner dient.

4. Verwendung des Verbundkunststoffes nach Anspruch 1—3 zur Herstellung von Flüssigkeitsspeichern, insbesondere Druckspeichern.

## Revendications

1. Matière plastique composite consistante en une combinaison des résines polyesters insaturées renforcées des fibres et des oxides polyphénylènes modifiés avec le styrole, caractérisée par une teneur en fibres d'au moins 60% sous forme de pliage présque 100% longitudinal.

2. Matière plastique composite selon revendication 1, caractérisée par des valeurs pour résistance à la flexion et à la traction des polyesters insaturés entre 700—900 N/mm² ou 800—1000 N/mm² et des oxides polyphénylènes modifiés entre environ 40—60 N/mm² ou 85—105 N/mm².

3. Matière plastique composite selon revendications 1 ou 2, caractérisée par sa fabrication utilisant des procédés de thermoformage ou d'enroulement avec l'oxide pholyphénylène servant comme liner.

4. Usage de la matière plastique composite selon revendications 1—3 pour la fabrication des reservoirs pour liquides, particulièrement reservoirs sous pression.

## Claims

1. A composite plastic comprising a combination of fiber-reinforced unsaturated polyester resins and styrene-modified polyphenylene oxide, characterized by a fibre proportion of over 60% in the form of an almost 100% longitudinally laid layer.

2. A composite plastic according to claim 1, characterized by tensile strength and flexural strength values of the unsaturated polyester in the range of 700 to 900 N/mm² and 800 to 1000 N/mm², respectively, and of the modified phenylene oxide from approximately 40 to 60 N/mm² and 85 to 105 N/mm², respectively.

3. A composite plastic according to claim 1 or 2, characterized in that it is manufactured by deep-drawing or winding processes with the polyphenylene oxide being used as a liner.

4. The use of the composite plastic according to claim 1—3 for manufacturing water storage containers, in particular pressurized containers.

UP

PPO

Abb. 2

1

3

2